(19) Europäisches Patentamt
European Patent Office
Office européen des brevets

(11) Veröffentlichungsnummer: **0 479 244 A1**

(12) # EUROPÄISCHE PATENTANMELDUNG

(21) Anmeldenummer: **91116778.1**

(51) Int. Cl.5: **C07F 7/08**

(22) Anmeldetag: **01.10.91**

(30) Priorität: **01.10.90 DE 4031001**

(43) Veröffentlichungstag der Anmeldung: **08.04.92 Patentblatt 92/15**

(84) Benannte Vertragsstaaten: **CH DE FR GB IT LI NL**

(71) Anmelder: **HOECHST AKTIENGESELLSCHAFT**
**Postfach 80 03 20**
**W-6230 Frankfurt am Main 80(DE)**

(72) Erfinder: **Knorr, Harald, Dr.**
**Rauenthaler Weg 5**
**W-6000 Frankfurt am Main(DE)**

(54) **Verfahren zur Herstellung von 4-Ethoxyphenyl-3-arylpropyl-(dimethyl)silanen.**

(57) Die vorliegende Erfindung beschreibt ein Verfahren zur Herstellung von Verbindungen der Formel I

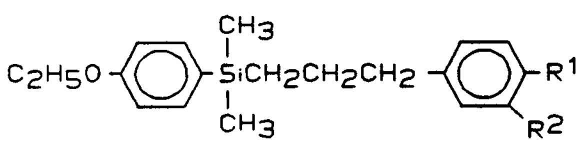

(I),

worin

$R^1$ Wasserstoff, Halogen, Alkyl, Alkoxy und

$R^2$ Wasserstoff, Halogen, Alkoxy oder Phenoxy, das durch Halogen, Alkyl, Alkoxy oder Alkylthio substituiert sein kann, bedeuten, durch Umsetzung einer Verbindung der Formel II

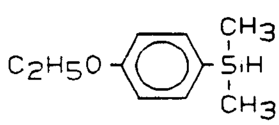

(II)

mit einer Verbindung der Formel III

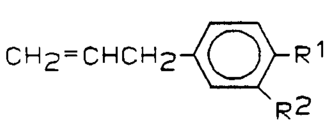

(III),

worin $R^1$ und $R^2$ die Bedeutungen wie in Formel I besitzen, in Gegenwart von katalytisch wirksamen Mengen Hexachlorplatinsäure, dadurch gekennzeichnet, daß man die Ausgangsverbindungen der Formeln II und III simultan bei Temperaturen von 60 °C bis 150 °C in das Reaktionsgefäß eindosiert und abreagieren läßt.

EP 0 479 244 A1

Gegenstand der vorliegenden Erfindung ist ein Verfahren zur Herstellung von Verbindungen der Formel I

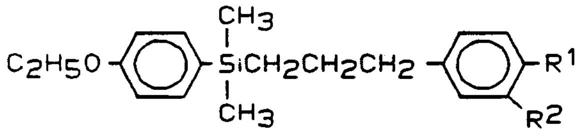 (I),

worin

$R^1$ Wasserstoff, Halogen, $(C_1-C_4)$Alkyl, $(C_1-C_4)$Alkoxy und

$R^2$ Wasserstoff, Halogen, $(C_1-C_4)$Alkoxy oder Phenoxy, das durch Halogen, $(C_1-C_4)$Alkyl, $(C_1-C_4)$-Alkoxy oder $(C_1-C_4)$Alkylthio substituiert sein kann, bedeuten, durch Umsetzung einer Verbindung der Formel II

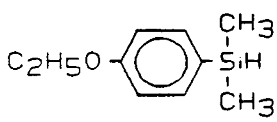 (II)

mit einer Verbindung der Formel III

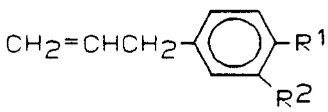 (III),

worin $R^1$ und $R^2$ die Bedeutungen wie in Formel I besitzen, in Gegenwart von katalytisch wirksamen Mengen Hexachlorplatinsäure, dadurch gekennzeichnet, daß man die Ausgangsverbindungen der Formeln II und III simultan bei Temperaturen von 60 °C bis 150 °C in das Reaktionsgefäß eindosiert und abreagieren läßt.

Bevorzugt ist dabei ein Temperaturbereich von 80-130 °C. Eine weitere besondere Ausgestaltung des erfindungsgemäßen Verfahrens besteht darin, daß die als Katalysator wirkende Hexachlorplatinsäure dem Allylbenzol der Formel III zugesetzt und diese Mischung simultan mit der Verbindung der Formel II in das Reaktionsgefäß eindosiert wird.

4-Ethoxyphenyl-3-arylpropyl-(dimethyl)silane dienen als wertvolle Zwischenprodukte bei der Herstellung von Insektiziden oder besitzen selbst insektizide Wirkungen (EP-A 0 224 024).

Die Herstellung der 4-Ethoxyphenyl-3-arylpropyl-(dimethyl)silane I erfolgt durch Hydrosilylierung von 4-Ethoxyphenyl(dimethyl)silan der Formel II an Allylbenzole der allgemeinen Formel III, wobei in Gegenwart von katalytischen Mengen Hexachlorplatinsäure gearbeitet werden kann.

Hydrosilylierungen werden allgemein in der Weise durchgeführt, daß man die zu addierenden Komponenten vorlegt und danach den Katalysator zufügt, wodurch die Umsetzung nach einer Induktionsphase in Gang gesetzt wird. Bei diesem Verfahrensmodus werden in kurzer Zeit sehr große Wärmemengen freigesetzt, was zu bedrohlichen Situationen vor allem beim Herstellen größerer Mengen führt (J.L. Speier: "Homogeneous Catalysis of Hydrosilation by Transition Metals", Adv. Organom. Chem. Vol. 17 (409) 1979). Bei dieser Verfahrensweise treten zudem unerwünschte Nebenreaktionen auf, was zu deutlichen Ausbeuteminderungen führt.

So werden ca. 14-20 % "Styrole" der allgemeinen Formel A

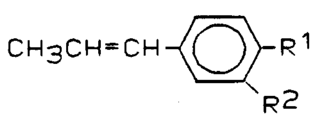 (A)

vorgefunden. Diese Verbindungen stehen einer Bildung der gewünschten 4-Ethoxyphenyl-3-arylpropyl-(dimethyl)silane im Wege und zwar insofern, als sie mit den Silanen der Formel II zu isomeren 4-Ethoxyphenyl-2-arylethyl-(dimethyl)silanen der Formel B

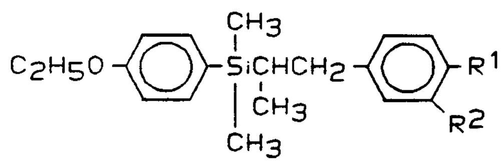

(B)

weiterreagieren. Das Endprodukt muß deshalb destillativ von unerwüschten Komponenten abgetrennt werden.

Bekannt ist auch ein Verfahren, bei dem Silane mit Olefinen in Gegenwart einer Komplexverbindung eines Elementes der VIII. Nebengruppe des Periodensystems als Katalysator umgesetzt wird (EP-A0224 024). Diese Reaktion wird bei mäßigen Temperaturen (ca. 45 °C) ohne Lösungsmittel durchgeführt (vgl. auch Houben Weyl, Methoden der organischen Chemie, Bd. XIII/5, Georg Thieme Verlag, Stuttgart 1980, S. 51 ff).

Es wurde nun überraschenderweise ein sehr einfaches Verfahren zur Herstellung von 4-Ethoxyphenyl-3-arylpropyl-(dimethyl)silanender Formel I gefunden, mit dem die oben geschilderten Nebenreaktionen umgangen werden können und mit dem zusätzlich eine einfachere Produktgewinnung möglich wird. Fügt man nämlich die zu addierenden Ausgangskomponenten simultan zusammen, so verläuft die ansonsten stark exotherme Reaktion gemäßigt ab. Durch diese Verfahrensweise gelingt es in einfacher Weise, die Ausbeuten an den gewünschten 4-Ethoxyphenyl-3-arylpropyl-(dimethyl)silanen deutlich zu erhöhen.

Es war nicht vorhersehbar, daß man mit diesem speziellen Zugabemodus erfolgreich sein würde und in einfacher Weise die gewünschten 4-Ethoxy-phenyl-3-arylpropyl-(dimethyl)silane herstellen könnte. Fügt man nämlich eine der beiden Ausgangskomponenten zur anderen hinzu, so wird ebenfalls die schon eingangs geschilderte stark exotherme Reaktion beobachtet, wobei Temperaturen von über 140 °C auftreten können. Dies bedingt jedoch Ausbeuteverluste und nur maximal isolierbare Produktmengen von ca- 85-86 % d. Th..

Die für das erfindungsgemäße Verfahren notwendigen Ausgangsstoffe der Formeln II unnd III sind entweder bekannt (EP-A 0 224 024) oder lassen sich wie die zu ihrer Herstellung notwendigen Vorläufer in enger Anlehnung an literaturbekannte Reaktionen herstellen: A. Citterio, Org. Synth. 62, 67 (1984); E. Möller, R. Schöter, Methoden der org. Chemie (Houben-Weyl) Bd. XI/71, 648-664, (1957); A.C. Cope, C.L. Bumgardner, J. Amer. Chem. Soc. 79, 960 (1957)); s. Methoden der org. Chemie (Houben-Weyl), Bd. XIII/5, Georg Thieme Verlag, Stuttgart 1980; E. Pfeil, Angew. Chem. 65, 155-158 (1953); H.H. Hodgson, Chem. Rev. 40, 251-277 (1947); H. Fricke, Methoden der org. Chemie (Houben-Weyl), Bd. V/1b, 465-476 (1972).

Als Allylbenzole der Formel II werden bei dem erfindungsgemäßen Verfahren insbesondere 4-Fluor-3-phenoxy-allylbenzol bzw. 4-Fluor-3-chlor-allylbenzol bzw. 4-Fluor-3-brom-allylbenzol eingesetzt, wobei bezogen auf das Silan der Formel II meist äquimolare Mengen bevorzugt werden. Es kann aber auch eines der möglichen Ausgangsmaterialien in bis zu 20 Mol-% Überschuß verwendet werden.

Es ist auch vorteilhaft, die Produkte des erfindungsgemäßen Verfahren der allgemeinen Formel I selbst als Lösungsmittel zu verwenden bzw. vor Beginn der Umsetzung vorzulegen. Diese letztgenannte Maßnahme ist vor allem dann sinnvoll, wenn die Umsetzung kontinuierlich geführt werden soll.

Die Reaktionstemperatur bei der Umsetzung variiert zwischen 60 °C und 150 °C. Insbesondere arbeitet man jedoch vorteilhaft zwischen 80 °C und 130 °C.

Als Katalysator wird die für Hydrosilylierungen bekanntermaßen benutzte Hexachlorplatinsäure eingesetzt. Zum Einsatz kommen Mengen zwischen 0,5 mg bis 50 mg $H_2PtCl_6$ x 6 $H_2O$ pro Mol Edukt der Formel III und zwar meistens in Form einer 30 %igen Lösung in Isopropanol.

Zur besseren Dosierung ist es zweckmäßig, den Katalysator in einem der beiden Ausgangsmaterialien der Formeln II bzw. III zu lösen. Von Vorteil ist es, wenn der Katalysator in der Ausgangsverbindung der Formel III gelöst vorliegt.

Die Reaktion wird bevorzugt ohne die Gegenwart von Lösungsmitteln oder aber in Gegenwart der Verbindungen der allgemeinen Formel I durchgeführt. Es können aber auch andere Lösungsmittel wie Kohlenwasserstoffe, halogenierte Kohlenwasserstoffe, Äther sowie Aromaten und Halogenaromaten zum Einsatz kommen, wenn sie zwischen 60 °C und 140 °C sieden.

Das erfindungsgemäße Verfahren läßt sich in der Weise durchführen, daß man beispielsweise zunächst den Katalysator in dem Allylbenzol der Formel III löst und diese Lösung simultan mit dem Silan der Formel II in ein Reaktionsgefäß, welches etwas Produkt der Formel I enthält, bei ca. 100 °C eindosiert. Man läßt

abreagieren und führt zweckmäßig das entstandene Produkt der Formel I nach einer Nachrührphase ab.

Die Isolierung des Produktes kann destillativ aus der Reaktionsmischung erfolgen, wobei zunächst wenig Leichtsieder entfernt werden. Aufgrund des vollständigen Reaktionsverlaufes bei der erfindungsgemäßen Verfahrensweise ist es auch möglich, den Katalysator mit Wasser zu entfernen unnd dann das Produkt für eventuelle Folgereaktionen undestilliert zur Verfügung zu stellen.

Das erfindungsgemäße Verfahren wird durch die nachfolgenden Beispiele verdeutlicht.

**Ausführungsbeispiele**

Beispiel 1: 4-Ethoxyphenyl-3-(4-fluor-3-chlorphenyl)propyl-(dimethyl)silan

0,3 Mol 4-Fluor-3-chlor-allylbenzol (51,6 g, 99,2 %ig) werden mit 1 Tropfen Hexachlorplatinsäure (30 %ig in Isopropanol) versetzt. Diese Lösung wird innerhalb von 40 Minuten simultan mit 0,3 Mol 4-Ethoxyphenyl-(dimethyl)silan (56 g, 96,5 %ig) bei einer Ausgangstemperatur von 95 °C in einen Rührkolben getropft. Die Innentemperatur wird bei ca. 100 °C gehalten. Man rührt 1 h bei 100 °C nach und erhält nach GC eine Mischung von 0,8 % 4-Fluor-3-chlorallylbenzol (= 1,7 % d. Th.), 0,8 % 4-Ethoxyphenyl-(dimethyl)silan (= 1,6 % d. Th.), 94,7 % 4-Ethoxyphenyl-3-[4-fluor-3-chlorphenyl]propyl-(dimethyl)silan (= 96,6 % d. Th.).

Beispiel 2 (Vergleichsbeispiel)

5,564 Mol (1042 g, 96,1 %ig) 4-Ethoxyphenyl-(dimethyl)silan werden bei 100 °C vorgelegt. Man tropft innerhalb von 47 Minuten 5,617 Mol (1000 g, 95,9 %ig) 4-Fluor-3-chlorallylbenzol inklusive 12 Tropfen einer 30 %iger $H_2PtCl_6$-Isopropanollösung zu. Dabei steigt die Temperatur bis auf 143 °C an. Man hält beim Zutropfen ca. 134-137 °C und destilliert nach Beendigung der Reaktion im Hochvakuum von 0,1 mbar bei 47-160 °C Kopftemperatur 285,3 g Vorlauf ab. Dann gehen zwischen 160-170 °C bei 0,1-0,05 mbar ca. 1732 g (96,9 %iges) Produkt über. Das entspricht einer Ausbeute von 85-86 % d. Th..

Beispiel 3: (Vergleichsbeispiel)

Zu einer Mischung von 1,37 Mol (234 g, 99,9 %ig) 4-Fluor-3-chlor-allylbenzol und 1,45 Mol (263 g, 99,2 %ig) 4-Ethoxyphenyl-(dimethyl)silan fügt man bei Raumtemperatur 3 Tropfen einer 30 %igen Lösung von Hexachlorplatinsäure in Isopropanol. Nach kurzer Induktionsphase erfolgt eine starke exotherme Reaktion und die Mischung erwärmt sich auf 130 °C. Man läßt kurz nachrühren und destilliert danach 392 g 4-Ethoxyphenyl-3-(4-fluor-3-chlorphenyl)propyl-(dimethyl)silan als Hauptlauf bei 165-170 °C und 0,1 mbar ab. Das entspricht 81,6 % Rohausbeute (97,4 %ig nach GC, 79,5 % d. Th.).

Beispiel 4: 4-Ethoxyphenyl-3-(4-fluor-3-phenoxyphenyl)propyl-(dimethyl)silan (Vergleichsbeispiel)

Zu einer Mischung von 2,98 Mol 4-Fluor-3-phenoxyphenyl-allylbenzol (98,9 %ig, 687 g) und 3,24 Mol 4-Ethoxyphenyl-(dimethyl)silan (595 g, 97,9 %ig) werden bei 22 °C zweimal einige Tropfen einer 30 %igen Lösung von Hexachlorplatinsäure in Isopropanol zugesetzt. Nach einer Induktionsphase von $1\frac{1}{2}$ Std. erfolgt eine spontane Erwärmung auf 130 °C. Nach kurzem Nachrühren destilliert man im Hochvakuum von 0,4-0,15 mbar 259 g Vorlauf und sodann 1003 g Produkt (GC 98,7 %ig) ab. Das entspricht einer Ausbeute von 81,4 % d. Th..

Beispiel 5: 4-Ethoxy-3-(4-fluor-3-phenoxyphenyl)propyl-(dimethyl)silan

Zu 2,98 Mol 4-Fluor-3-phenoxyphenyl-allylbenzol (98,9 %ig, 687 g) fügt man 10 Tropfen 30 %ige Lösung $H_2PtCl_6$ in Isopropanol. Diese Lösung wird innerhalb von $1\frac{1}{2}$ Std. simultan mit 3,0 Mol 4-Ethoxyphenyl-(dimethyl)silan (552 g, 97,9 %ig) bei 100 °C in einen Rührkolben getropft und dabei 100 °C gehalten. Man läßt 1 Std. nachrühren und erhält dann eine Rohmischung (1240 g) mit einer Zusammensetzung von 95,1 % 4-Ethoxyphenyl-3-(4-fluor-3-phenoxyphenyl)-propyl-(dimethyl)silan (= 97 % d. Th.), 1,0 % 4-Ethoxyphenyl-(dimethyl)silan (= 1,6 % d. Th.), 0,9 % 4-Fluor-3-phenoxyphenyl-allylbenzol (= 1,7 % d. Th.).

Destilliert man dieses Gemisch am Kurzwegverdampfer, so erhält man 1177 g 99 %iges Produkt. Dies enspricht einer Ausbeute von 95,8 % d. Th..

Beispiel 6: (Vergleichsbeispiel) (analog zu Bsp. 2):

5,29 Mol 4-Ethoxyphenyl-dimethylsilan (978 g, 97,3 %ig) wurden bei 110 °C vorgelegt. Eine Mischung aus 5,2 Mol 4-Fluor-3-chlor-allylbenzol (928 g, 95,5 %ig) und 11 Tropfen einer 30 %igen $H_2PtCl_6$-Isopropanol-Lösung wurde innerhalb von 40 Minuten zugetropft. Es erfolgt ein Temperaturanstieg auf 158 °C. Nach Destillation im Hochvakuum bei 160-165 °C und 0,1 mbar erhielt man 1481,3 g (97 %ig) 4-Ethoxyphenyl-3-(4-flour-3-chlorphenyl)propyldimethylsilan. Das entspricht einer Ausbeute von 78,8 % d. Th.

Beispiel 7: (Vergleichsbeispiel) (analog zu Bsp. 2):

0,145 Mol 4-Ethoxyphenyl-dimethylsilan (26,6 g, 98,1 %ig) wurden bei 25 °C vorgelegt. Bei 25 °C wurde eine Mischung aus 23,4 g 4-Flour-3-chlorallylbenzol (0,14 Mol, GC:99,8 %) und 3 Tropfen einer 30 %igen $H_2PtCl_6$-Isopropanol-Lösung in 30 Minuten zudosiert. Es setzt eine exotherme Reaktion ein und die Innentemperatur steigt schnell auf 122 °C. Nach Destillation im Hochvakuum bei 160-165 °C und 0,1 mbar verbleiben 40,1 g (92,7 %ig) Produkt. Das entspricht einer Ausbeute von 77,4 % d. Th.

Beispiel 8: (Vergleichsbeispiel)

0,3 Mol (56,2 g, 96 %ig) 4-Ethoxyphenylsilan werden bei Raumtemperatur mit 3 Tropfen einer 30 %igen $H_2PtCl_6$.Isopropanollösung versetzt. Bei 100 °C legt man 0,3 Mol (51,6 g, 99 %ig) 4-Flour-3-chlor-allylbenzol vor und fügt die obige Mischung innerhalb von 30 Minuten zu. Es erfolgt ein exothermer Anstieg auf 140 °C. Dann destilliert man im Hochvakuum bei 160-162 °C und 0,05 mbar 88,7 g (96 %ig) 4-Ethoxyphenyl-3-(4-Flour-3-chlorphenyl)-propyldimethylsilan ab. Das entspricht einer Ausbeute von 81,0 % d. Th.

analog wurden durchgeführt:

| Vergleichs-beispiele | Anfangs-temperatur °C | exothermer Anstieg auf [°C] | Produkt-ausbeute % d. Th. |
|---|---|---|---|
| 9 | 20 | 131 | 79,8 |
| 10 | 70-80 | 129 | 82,6 |

Beispiel 11: (Vergleichsbeispiel)

0,14 Mol (23,4 g) 4-Flour-3-chlorallylbenzol und 3 Tropfen einer 30% igen $H_2PtCl_6$-Isopropanol-Lösung wurden bei Raumtemperatur vorgelegt. Innerhalb von 30 Minuten fügte man 0,145 Mol (26,6 g, 98 %ig) 4-Ethoxyphenyl-dimethyldisilan zu. Man beobachtete einen exothermen Anstieg auf 115 °C. Der Katalysator wird dabei schwarz. Man destillierte dann im Hochvakuum bei 180-184 °C und 1 mbar 40,4 g Produkt (GC: 94,3 %ig). Das entspricht einer Ausbeute von 79,3 % d. Th.

analog wurde durchgeführt:

| Vergleichs-beispiel | Anfangs-temperatur °C | exothermer Anstieg auf [°C] | Produkt-ausbeute % d. Th. |
|---|---|---|---|
| 12 | 100 | 155 | 78,2 |

Beispiel 13: (Vergleichsbeispiel)

70 ml n-Heptan werden bei Rückfluß vorgelegt. Innerhalb von 1 Stunde wurden 1 Mol 4-Flour-3-chlorallylbenzol (172,7 g, 98,7 %ig), inklusive 4 Tropfen einer 30 %igen Lösung von $H_2PtCl_6$ in Isopropanol, und 1 Mol 4-Ethoxyphenyldimethylsilan (182,4 g, 98,6 %ig) hinzu.

Es setzt eine exotherme Reaktion ein und man erhält 130 °C Innentemperatur. In der Heptanlösung wurden 65,3 % = 0,751 Mol 4-Ethoxyphenyl-3-(4-Flour-3-chlorphenyl)propyl-dimethylsilan nachgewiesen.

Das entspricht einer Ausbeute von 75,1 % d. Th.

Beispiel 14: (Vergleichsbeispiel)

0,3 Mol 4-Fluor-3-chlorallylbenzol (51,6 g, 99,2 %ig) und 0,3 Mol 4-Ethoxyphenyl-dimethylsilan (56 g, 96,5 %ig) werden zusammengemischt und innerhalb von 25 Minuten bei 100 °C zu einer Mischung von 25 ml Heptan und 2 Tropfen Hexachlorplatinsäure (30 %ig in Isopropanol), welche ebenfalls bei 100 °C vorgelegt war, zudosiert. Man läßt noch 1 Stunde nachrühren und erhält eine Produktmischung, welche nach GC 61,3 % (≙ 72,1 % d. Th.) 4-Ethoxyphenyl-[3-(4-Fluor-3-chlorphenyl)-propyl]-dimethylsilan, 2,1 % 4-Fluor-3-chlorallylbenzol (≙ 5,1 % v. E.) und 2,8 % 4-Ethoxyphenyldimethylsilan (≙ 6,4 % v. E.) enthält. Zusätzlich werden deutliche Mengen an Beiprodukten, z.B. 4-Fluor-3-chlor-ω-methylstyrolen nachgewiesen (11,6 % GC ≙ 28,0 % v. E.).

Beispiel 15: (Vergleichsbeispiel)

0,3 Mol 4-Fluor-3-chlorallylbenzol (51,6 g, 99,2 %ig) und 0,3 Mol 4-Ethoxyphenyl-dimethylsilan (56 g, 96,5 %ig) werden zusammengegeben und innerhalb von 20 Minuten bei 100 °C zu einer Mischung von 10 g (96 %iges) 4-Ethoxyphenyl-[3-(4-Fluor-3-chlorphenyl)-propyl]-dimethylsilan (≙ 0,028 Mol) und 2 Tropfen Hexachlorplatinsäure (30 %ig in Isopropanol), welche ebenfalls bei 100 °C vorgelegt war, zudosiert. Man läßt 1 Stunde nachrühren und erhält eine Produktmischung, die nach GC-Messung 59,9 % 4-Ethoxyphenyl-[3-(3-chlor-4-fluorphenyl)-propyl]-dimethylsilan (≙ 57,6 % d. Th.), 1,3 % 4-Fluor-3-chlorallylbenzol (≙ 2,9 % v. E.) und 2,6 % 4-Ethoxyphenyl-dimethylsilan (≙ 5,7 % v. E.) enthält. Zusätzlich werden deutliche Mengen an 4-Fluor-3-chlor-ω-methylstyrolen (zusammen 10,7 % GC ≙ 24,6 % d. Th.) und anderen Nebenkomponenten nachgewiesen.

## Patentansprüche

**1.** Verfahren zur Herstellung von Verbindungen der Formel I

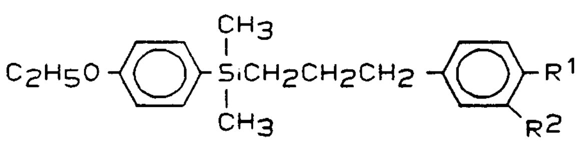

(I),

worin

$R^1$ Wasserstoff, Halogen, $(C_1\text{-}C_4)$Alkyl, $(C_1\text{-}C_4)$Alkoxy und

$R^2$ Wasserstoff, Halogen, $(C_1\text{-}C_4)$Alkoxy oder Phenoxy, das durch Halogen, $(C_1\text{-}C_4)$Alkyl, $(C_1\text{-}C_4)$Alkoxy oder $(C_1\text{-}C_4)$Alkylthio substituiert sein kann, bedeuten, durch Umsetzung einer Verbindung der Formel II

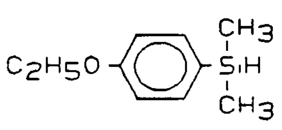

(II)

mit einer Verbindung der Formel III

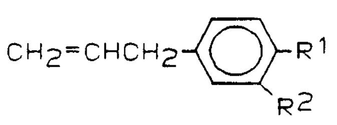

(III),

worin $R^1$ und $R^2$ die Bedeutungen wie in Formel I besitzen, in Gegenwart von katalytisch wirksamen Mengen Hexachlorplatinsäure, dadurch gekennzeichnet, daß man die Ausgangsverbindungen der Formeln II und III simultan bei Temperaturen von 60 °C bis 150 °C in das Reaktionsgefäß eindosiert und abreagieren läßt.

2. Verfahren gemäß Anspruch 1, dadurch gekennzeichnet, daß man die Ausgangsverbindungen der Formeln II und III simultan bei Temperaturen zwischen 80 °C und 130 °C in das Reaktionsgefäß eindosiert.

3. Verfahren gemäß Anspruch 1 oder 2, dadurch gekennzeichnet, daß man den Katalysator Hexachlorplatinsäure in der Verbindung der Formel III löst und diese Mischung simultan mit der Verbindung der Formel II in das Reaktionsgefäß eindosiert.

Europäisches Patentamt

# EUROPÄISCHER RECHERCHENBERICHT

Nummer der Anmeldung

**EP 91 11 6778**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 851 456 (WACKER-CHEMIE)<br>* Anspruch 1; Seite 6, Zeilen 17-19 *<br>– – – | 1 | C 07 F 7/08 |
| A | EP-A-0 355 800 (HOECHST)<br>* Anspruch 1 *<br>– – – | 1 | |
| D,A | EP-A-0 224 024 (HOECHST)<br>* Anspruch 4h *<br>– – – | 1 | |
| D,A | HOUBEN-WEYL: METHODEN DER ORGANISCHEN CHEMIE Band XIII/5, Seite 52, Zeilen 4-7, 1980, Georg Thieme Verlag, Stuttgart, DE<br>– – – – – | 1 | |

RECHERCHIERTE SACHGEBIETE (Int. Cl.5)

C 07 F 7/08

Der vorliegende Recherchenbericht wurde für alle Patentansprüche erstellt

| Recherchenort | Abschlußdatum der Recherche | Prüfer |
|---|---|---|
| Berlin | 04 Dezember 91 | KAPTEYN H G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument